# EUROPÄISCHE PATENTANMELDUNG

(11) **EP 1 059 137 A2**
(43) Veröffentlichungstag der Anmeldung: **13.12.2000**
(21) Anmeldenummer: 00112416.3
(22) Anmeldetag: 09.06.2000
(51) Int. Cl.: B23K 9/00

(54) **Schweissspalt-Verfolgungseinrichtung**

(30) Priorität: 11.06.1999 DE 29910145 U
(71) Anmelder: H. Butting GmbH & Co. KG, 29379 Wittingen-Knesebeck (DE)
(72) Erfinder: Quitzow, Gerhard, 29379 Wittingen (DE); Weidl, Norbert, 29396 Schönewörde (DE)
(74) Vertreter: Gramm, Werner, Prof. Dipl.-Ing.

(57) **Zusammenfassung**

Die Erfindung betrifft eine Schweißspalt-Verfolgungseinrichtung zum Führen eines Schweißbrenners entlang eines Schweißspaltes (2), **gekennzeichnet** durch ein an einer Schweißanlage zu fixierendes Wirbelstrom-Führungssystem, das eine vor dem Schweißbrenner angeordnete, auf den Schweißspalt (2) auszurichtende Wirbelstromsonde (1) aufweist, an die ein die Sondenmeßwerte verarbeitendes Auswertegerät (7) angeschlossen ist, dessen Signale eine Steuereinrichtung (8, 11) für die Brennernachführung beaufschlagen.

## Beschreibung

Die Erfindung betrifft eine Schweißspalt-Verfolgungseinrichtung zum Führen eines Schweißbrenners entlang eines Schweißspaltes.

Bekanntgeworden ist ein optisches Nachführverfahren, das sich aber insbesondere beim Schweißen von Edelstahl als nachteilig erwiesen hat, da durch Spiegelungen der Schweißspalt nicht eindeutig zu erkennen ist.

Der Erfindung liegt somit die Aufgabe zugrunde, eine Schweißspalt-Verfolgungseinrichtung mit erweitertem Einsatzbereich zu entwickeln.

Diese Aufgabe wird erfindungsgemäß gelöst durch ein an einer Schweißanlage zu fixierendes Wirbelstrom-Führungssystem, das eine vor dem Schweißbrenner angeordnete, auf den Schweißspalt auszurichtende Wirbelstromsonde aufweist, an die ein die Sondenmeßwerte verarbeitendes Auswertegerät angeschlossen ist, dessen Signale eine Steuereinrichtung für die Brennernachführung beaufschlagen.

Dabei ist es zweckmäßig, wenn die Wirbelstromsonde eine den Schweißspalt abtastende Prüfspule aufweist, die eine über dem Schweißspalt liegende Senderspule sowie zwei beidseitig des Schweißspaltes geführte Empfängerspulen umfaßt.

Ferner kann es vorteilhaft sein, wenn das der Wirbelstromsonde nachgeschaltete Auswertegerät über eine Schrittmotor-Steuerung einen Schrittmotor für den Vorschub der Schweißspalt-Verfolgungseinrichtung und über eine Signalverarbeitung einen der Strahlachse des Brenners zugeordneten Servomotor beaufschlagt.

Die erfindungsgemäße Einrichtung ermöglicht eine exakte Brenner-Nachsteuerung in Anpassung an jeden Schweißspaltverlauf, wobei die Ausrichtung der Mechanik durch das Bedienungspersonal der Anlage erfolgt. Die Einrichtung wird eingesetzt, um beim Verschweißen von z.B. längsnahtgeschweißten Rohren oder Schächten den Schweißbrenner immer genau über dem Schweißspalt zu führen. Beim Ausweichen des Schweißspaltes wird der Schweißbrenner durch das Führungssystem automatisch nachgeführt und somit wieder in seine optimale Schweißposition gebracht. Dabei läßt sich die Einrichtung auch nicht durch etwaige Heftungen im Schweißspalt irritieren; ein Nachsteuern erfolgt nur bei verlaufendem Schweißspalt.

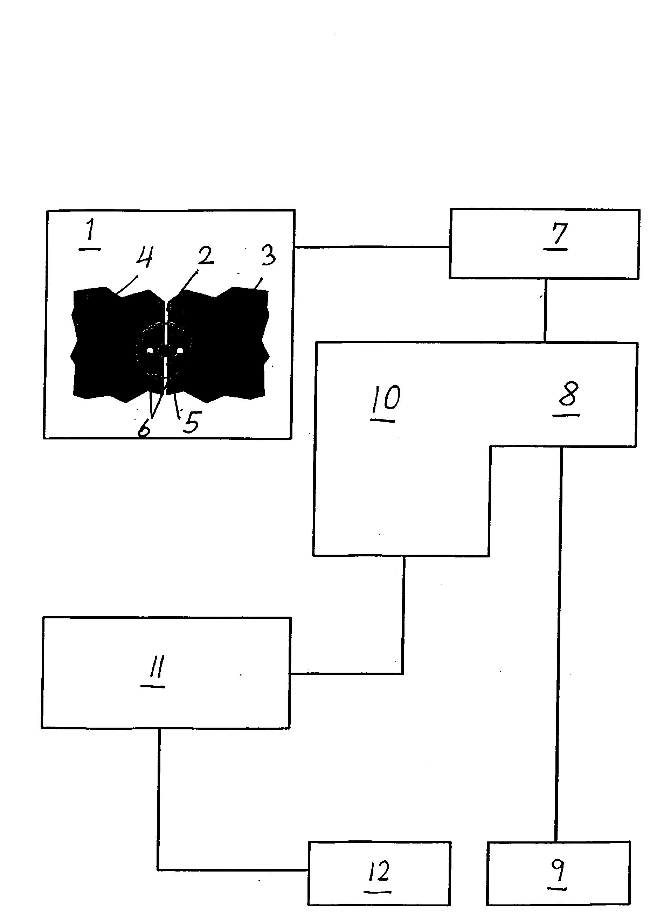

In der Zeichnung ist eine als Beispiel dienende Ausführungsform der Erfindung in Form eines Blockbildes dargestellt.

Das Blockbild zeigt schematisch den Aufbau einer Schweißspalt-Verfolgungseinrichtung. Das Feld 1 symbolisiert eine den Messkopf der Einrichtung bildende Wirbelstromsonde, die über einem Schweißspalt 2 zwischen zwei miteinander zu verbindenden Werkstückabschnitten 3, 4 geführt wird. Diese Wirbelstromsonde 1 weist eine den Schweißspalt 2 abtastende Prüfspule auf, die eine über dem Schweißspalt 2 liegende Senderspule 5 sowie zwei beidseitig des Schweißspaltes 2 geführte Empfängerspulen 6 umfaßt.

Der Wirbelstromsonde 1 ist ein Auswertegerät 7 nachgeschaltet, das über eine Schrittmotor-Steuerung 8 einen Schrittmotor 9 für den Vorschub der Schweißspalt-Verfolgungseinrichtung und über eine Signalverarbeitung 10, die den Analogeingang in ein Digitalsignal umwandelt, und über eine Servomotor-Steuerung 11 einen der Strahlachse des Brenners zugeordneten Servomotor 12 beaufschlagt.

## Patentansprüche

1. Schweißspalt-Verfolgungseinrichtung zum Führen eines Schweißbrenners entlang eines Schweißspaltes (2), gekennzeichnet durch ein an einer Schweißanlage zu fixierendes Wirbelstrom-Führungssystem, das eine vor dem Schweißbrenner angeordnete, auf den Schweißspalt (2) auszurichtende Wirbeistromsonde (1) aufweist, an die ein die Sondenmeßwerte verarbeitendes Auswertegerät (7) angeschlossen ist, dessen Signale eine Steuereinrichtung (8, 11) für die Brennernachführung beaufschlagen.

2. Einrichtung nach Anspruch 1, **dadurch gekennzeichnet,** dass die Wirbelstromsonde (1) eine den Schweißspalt (2) abtastende Prüfspule aufweist, die eine über dem Schweißspalt (2) liegende Senderspule (5) sowie zwei beidseitig des Schweißspaltes (2) geführte Empfängerspulen (6) umfaßt.

3. Einrichtung nach Anspruch 1 oder 2, **dadurch gekennzeichnet,** dass das der Wirbelstromsonde (1) nachgeschaltete Auswertegerät (7) über eine Schrittmotor-Steuerung (8) einen Schrittmotor (9) für den Vorschub der Schweißspalt-Verfolgungseinrichtung und über eine Signalverarbeitung (10) einen der Strahlachse des Brenners zugeordneten Servomotor (12) beaufschlagt.
